# EUROPÄISCHE PATENTSCHRIFT

(11) **EP 3 315 013 B1**
(45) Veröffentlichungstag und Bekanntmachung des Hinweises auf die Patenterteilung: **15.04.2020**
(21) Anmeldenummer: 17001745.3
(22) Anmeldetag: 24.10.2017
(51) Int. Cl.: A01D 90/04, A01F 15/10

(54) **ERNTEMASCHINE**
HARVESTER
MOISSONNEUSE

(30) Priorität: 28.10.2016 DE 202016006684 U
(43) Veröffentlichungstag der Anmeldung: 02.05.2018
(73) Patentinhaber: Maschinenfabrik Bernard Krone GmbH & Co. KG, 48480 Spelle (DE)
(72) Erfinder: Jung, Stefan, 48612 Horstmar (DE)

(56) Entgegenhaltungen:
- EP-A1- 0 255 074
- DE-A1- 4 301 636
- DE-U1-202006 018 719
- DE-U1-202014 003 763

## Beschreibung

Die Erfindung betrifft eine Erntemaschine nach dem Oberbegriff des Anspruchs 1.

Eine derartige vorbekannte Erntemaschine, z.B. DE 20 2006 018 719 U1, weist eine Aufnahmeeinheit, einen der Aufnahmeeinheit in Förderrichtung des Ernteguts nachgeordneten Förderkanal und einen Förderrotor auf, der eine Vielzahl von Förderelementen aufweist. Die Förderelemente ragen in den Förderkanal hinein. Der Förderrotor weist eine Vielzahl von jeweils zwischen zwei in Förderrichtung benachbarten Förderelementen gelegenen Förderräumen auf. Weiterhin ragen wahlweise mehrere Schneidmesser in den Förderkanal hinein, die zur Zerkleinerung des Ernteguts mit den Förderelementen des Förderrotors zusammen wirken.

Durch neuere Erkenntnisse über die Weiterverarbeitung des Erntegutes nach der Ernte ist die Bedeutung einer qualitativ hochwertigen Zerkleinerung des Erntegutes deutlich geworden. Diese Erntegutqualität kann mit der vorbekannten Erntemaschine nicht dargestellt werden.

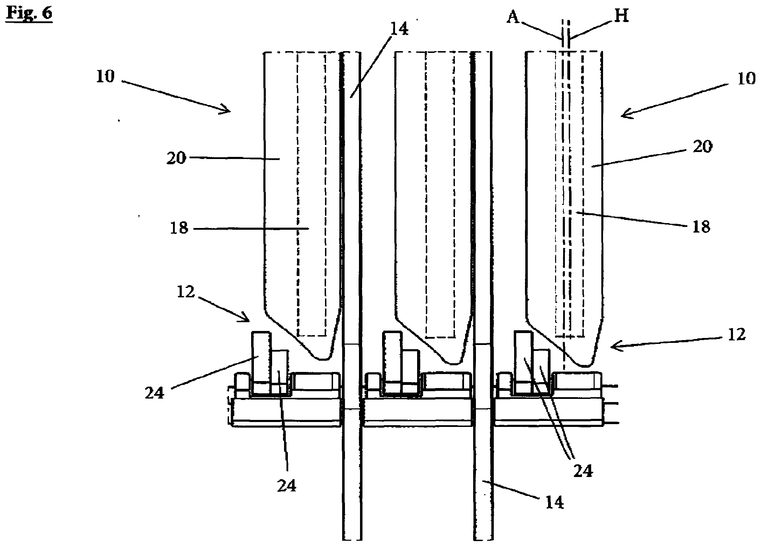

Aus der EP 0 255 074 A1 geht ein Ladewagen mit einer Fördereinrichtung hervor, deren Förderzinken sich über die Breite der Fördereinrichtung erstrecken und in einem Förderkanal mit einer Reihe von in den Förderkanal hineinragenden Messern zusammenwirken. Insbesondere aus den Fig. 6 und 7 ist erkennbar, dass die Förderkämme, an denen die Förderzinken angebracht sind, in Bezug auf die Breite der Fördereinrichtung abwechselnd mit kurzen und langen Förderzinken ausgestattet sind. Davon ausgehend ergeben sich zwischen benachbarten Förderzinken Förderräume mit unterschiedlicher Größe. Aufgrund der abwechselnd angeordneten kurzen und langen Förderzinken findet mit dieser Gestaltung einer Fördereinrichtung eine Anpassung der Fördereinrichtung an Schwadformen eines Erntegutschwades nicht statt, die in Randbereichen dünn ausgeprägt sind und in ihrem Mittelbereich eine große Schadstärke aufweisen.

Der Erfindung liegt die Aufgabe zugrunde, eine Erntemaschine der eingangs genannten Art dahingehend zu verbessern, dass eine verbesserte Erntegutqualität erreicht wird.

Nach der Erfindung wird eine Erntemaschine, insbesondere Ladewagen oder Ballenpresse vorgeschlagen, mit einer Aufnahmeeinheit, vorzugsweise einer Pickupwalze, mit einem der Aufnahmeeinheit in Förderrichtung des Erntegutes nachgeordneten Förderkanal und mit einem Förderrotor, der eine Vielzahl von Förderelementen, beispielsweise Förderzinken, die in den Förderkanal hineinragen und an ihrem äußeren Ende eine Förderspitze aufweisen, sowie eine Vielzahl von jeweils zwischen zwei in Förderrichtung benachbarten Förderelementen gelegene Förderräume aufweist, sowie mit mehreren wahlweise in den Förderkanal hineinragenden Schneidmessern, die zur Zerkleinerung des Erntegutes mit den Förderelementen des Förderrotors zusammenwirken, wobei der Förderrotor in Längsrichtung zumindest teilweise Förderräume unterschiedlicher Größe aufweist und die Größen der Förderräume in Randbereichen des Förderrotors kleiner sind als in Zentralbereichen.

Der Förderraum ist dabei der Raum, der durch die Hüllkurve der Förderspitzen der Förderelemente und die Konturen des Förderrotors zwischen zwei in Umfangsrichtung des Förderrotors benachbarten Förderelementen, die in Richtung der Förderspitzen offen sind, begrenzt ist. Die Größen der Förderräume zwischen zwei in Förderrichtung benachbarten Förderelementen und zumindest zwei weiteren in Längsrichtung des Förderrotors von den ersten Förderelementen beabstandeten, in Förderrichtung benachbarten Förderelementen sind unterschiedlich ausgebildet. Hierdurch kann der für die Förderung eines Erntegutstromes zur Verfügung stehende Förderraum an die zu erwartende Erntegutstromstärke angepasst werden. Das Erntegut wird stärker geführt und unterstützt, was ein besseres Schneidergebnis zur Folge hat. Es wird vermieden, dass das Erntegut gequetscht, gerissen oder gar nicht zerkleinert wird.

Mit Vorteil sind die Förderräume In Randbereichen des Förderrotors kleiner als in Zentralbereichen. Üblicherweise ist in einem Schwad auf dem Feld in den Randbereichen des Schwades weniger Erntegut vorhanden als in Zentralbereichen. Dadurch, dass in Randbereichen des Förderrotors die Förderräume eine geringere Größe aufweisen, erfährt das Fördergut, das sich In Randbereichen des Schwades befindet, eine verbesserte Unterstützung beim Zerkleinerungsvorgang, was eine verbesserte Zerkleinerungsqualität zur Folge hat.

Gemäß einer besonderen Ausführungsform weist der Förderrotor mehrere Zonen auf, in denen die Förderräume unterschiedlich groß sind. Durch die Veränderung der Förderräume in diskreten Schritten kann der Förderrotor mit überschaubarem konstruktivem Aufwand an den zu erwartenden Erntegutstrom angepasst werden. Beispielsweise Ist eine Einteilung in drei Abstufungen für einen geringen, mittleren und hohen Erntegutstrom denkbar.

Mit Vorteil sind die Förderräume im Bereich der je zwei bis sechs äußeren Reihen von Förderelementen, d.h. In Umfangsrichtung hintereinander angeordneten Förderelemente, mit einer geringen Größe für einen geringen Erntegutstrom ausgestaltet. Im Bereich der daran anschließenden je zwei bis sechs Reihen von Förderelementen sind die Förderräume mit einer mittleren Größe für einen mittleren Erntegutstrom ausgestaltet. In dem Bereich zwischen den Randberelchen sind die Förderräume mit einer großen Größe für einen hohen Erntegutstrom ausgestaltet. Hierdurch werden Zonen in den Randbereichen des Förderrotors definiert, die der üblichen Verteilung in einem Schwad Rechnung tragen. Bei einem Schwad ist im Bereich der Flanke des Schwades die Erntegutstärke stark abnehmend. Dem kann durch eine Einteilung in Zonen gerade in den Randbereichen des Förderrotors Rechnung getragen werden. Dadurch wird in den Randbereichen das Fördergut verbessert unterstützt, ohne die Durchsatzleistung in einem zentralen Mittelbereich des Förderrotors zu beeinträchtigen.

In einer bevorzugten Ausgestaltung werden die unterschiedlichen Förderräume durch eine unterschiedliche Formgebung der Förderelemente ausgestaltet. Unterschiedliche Größen der Förderräume können somit auf eine einfache Weise hergestellt werden.

Gemäß einer bevorzugten Ausführungsform sind die Förderelemente an Ringsegmenten angeordnet oder zumindest teilweise als Ringsegmente ausgeformt. Ein Ringsegment kann dabei mehrere Förderelemente aufweisen. Mit Hilfe solcher Ringsegmente lassen sich die Förderelemente vereinfacht an dem Förderrotor festlegen. Aus den Ringsegmenten lässt sich am Förderrotor ein umlaufender Ring erstellen. Durch eine Verbindung der Ringsegmente untereinander kann die Stabilität der Förderelemente auf dem Förderrotor verbessert werden. Die Ringsegmente können dann beispielsweise im Wesentlichen durch in Umfangsrichtung umlaufende Schweißnähte an dem Grundkörper des Förderrotors festgelegt werden. Dies erleichtert die Herstellung des Förderrotors.

Besonders bevorzugt können in Längsrichtung des Förderrotors unterschiedliche Größen der Förderräume durch eine Veränderung des Außendurchmessers des aus den Ringsegmenten ergebenden Kreisrings ausgebildet werden.

Eine weitere alternative Ausführungsform sieht vor, die Größen der Förderräume dadurch zu variieren, dass ein Raum zwischen zwei benachbarten Förderelementen des Förderrotors teilweise durch eine Abdeckung verschließbar ist. Durch das Verschließen eines Raumes zwischen benachbarten Förderelementen kann der Förderrotor lokal an den Erntegutstrom angepasst werden. Dadurch, dass der für das Erntegut zur Verfügung stehende Förderraum am Förderrotor durch die Abdeckung verkleinert wird, indem die Abdeckung einen Tell des Raumes zwischen zwei benachbarten Förderelementen ausfüllt, wird das Erntegut im Förderrotor stärker geführt und unterstützt, was ein besseres Schneidergebnis zur Folge hat. Es wird vermieden, dass das Erntegut gequetscht, gerissen oder gar nicht zerkleinert wird.

Mit Vorteil ist die Abdeckung in Randbereichen des Förderrotors angeordnet. Üblicherweise ist in einem Schwad auf dem Feld in den Randbereichen des Schwades weniger Erntegut vorhanden als in Zentralbereichen. Durch die Anordnung der Abdeckung in Randbereichen des Förderrotors erfahrt das Fördergut, das sich in Randbereichen des Schwades befindet, eine verbesserte Unterstützung beim Zerkleinerungsvorgang, was eine verbesserte Zerkleinerungsqualität zur Folge hat.

Gemäß einer besonderen Ausführungsform sind Abdeckungen unterschiedlicher Ausmaße am Förderrotor vorgesehen, die mehrere Zonen unterschiedlich großer verschlossener Räume ausbilden. Durch die Verwendung unterschiedlicher Abdeckungen kann der Förderrotor in verschiedene Zonen eingeteilt werden, die an den zu erwartenden Fördergutstrom angepasst sind. Beispielsweise ist eine Einteilung in drei Zonen für einen geringen, mittleren und hohen Erntegutstrom denkbar.

Mit Vorteil ist eine erste Abdeckung an den je zwei bis sechs äußeren Reihen von Förderelementen, d.h. in Umfangsrichtung hintereinander angeordneten Förderelementen, angeordnet und an den daran anschließenden je zwei bis sechs Reihen von Förderelementen ist eine zweite Abdeckung angeordnet, wobei durch die zweiten Abdeckungen jeweils ein kleinerer Raum verschließbar ist als durch die erste Abdeckung. Hierdurch werden Zonen in den Randbereichen des Förderrotors definiert, die der üblichen Verteilung in einem Schwad Rechnung tragen. Bei einem Schwad ist im Bereich der Flanke des Schwades die Erntegutstärke stark abnehmend, Dem kann durch eine Einteilung in Zonen gerade in den Randbereichen des Förderrotors Rechnung getragen werden. Dadurch wird in den Randbereichen das Fördergut verbessert unterstützt, ohne die Durchsetzleistung in einem zentralen Mittelbereich des Förderrotors zu beeinträchtigen.

In einer bevorzugten Ausgestaltung ist die Abdeckung zwischen den in Umfangsrichtung des Förderrotors hintereinander auf dem Förderrotor angeordneten Förderelementen festgelegt. Die Abdeckung lässt somit den Raum zwischen den in Längsrichtung des Förderrotors beabstandeten Förderelementen frei, so dass hier ein in den Förderkanal hineinragendes Schneidmesser geführt werden kann. Somit können für alle Zonen gleichartige Schneidmesser Verwendung finden.

Mit Vorteil Ist die Abdeckung durch ein zwischen benachbarte Förderelemente festgelegtes Blech gebildet. Ein Blech stellt eine einfache und kostengünstig herzustellende Form der Abdeckung dar.

In einer besonderen Ausführungsform ist die Abdeckung durch Schweißen festgelegt. Dadurch wird eine dauerhafte und verschleißfeste Verbindung zwischen dem Förderrotor und der Abdeckung gewährleistet, so dass die Lebensdauer der Erntemaschine erhöht wird.

Gemäß einer besonderen Ausführungsform Ist die Förderspitze des Förderelements asymmetrisch zu einer Längsmittelebene des Förderelements vorgesehen. Das Erntegut erfährt dadurch beim Zusammenwirken mit den Schneidmessem eine bessere Stützung und Führung durch das Förderelement im Bereich der Förderspitze und erreicht somit eine bessere Zerkleinerungsqualität. Der Vorteil einer Förderspitze, das Durchstechen der Erntegutmatte zu erleichtern, bleibt dabei erhalten.

Besonders vorteilhaft weist die Förderspitze des Förderelements einen geringeren seitlichen Lageabstand zu einem dem Förderelement zugeordneten Schneidmesser auf als die Längsmittelebene des Förderelements. Die Förderelemente des Rotors verlaufen typischerweise zwischen zwei Schneidmessern. Das Schnittergebnis kann positiv dadurch beeinflusst werden, dass ein Förderelement mit einem dieser Schneidmesser bevorzugt zusammenwirkend ausgeführt ist. Dies kann z.B. dadurch erreicht werden, dass das Förderelement räumlich näher an dem zugeordneten Schneidmesser angeordnet ist. Dadurch, dass die asymmetrisch zur Längsmittelebene des Förderelements angeordnete Förderspitze dem zugeordneten Schneidmesser zugewandt ist, erfährt das Erntegut beim Zerkleinerungsvorgang im Bereich der Förderspitze eine verbesserte Führung und Unterstützung, die die Zerkleinerungsqualität in diesem Bereich verbessert.

In einer vorteilhaften Ausgestaltung der Erntemaschine ist der Abstand zwischen dem Förderelement und dem dem Förderelement zugeordneten Schneidmesser so gewählt, dass ein scherenartiger Schnitt des Erntegutes erfolgt. Das Förderelement bewegt sich in einem ausreichend geringer Abstand oder sogar berührend an dem Schneidmesser vorbei. Das Erntegut wird zwischen dem Förderelement und dem zugeordneten Schneidmesser sauber zerschnitten. Ein Reißen und Quetschen wird weitmöglichst vermieden.

In einer bevorzugten Ausgestaltung weist das Förderelement einen mit dem Förderrotor verbundenen Halter und ein mit der Förderspitze versehenes, an dem Halter befestigtes Aufsatzteil auf. Zum einen kann das Aufsatzteil aus einem anderen, ggf. verschleißfesterem Material als der Halter gewählt werden. Andererseits ist es durch die Verwendung eines Halters mit einem Aufsatzteil möglich, den Bereich zwischen zwei benachbarten Schneidmessern bei geringem Materialbedarf weitgehend durch das Förderelement zu bestreichen, so dass das Erntegut eine verbesserte Führung und Unterstützung in diesem Bereich erfährt. Die Qualität des zerkleinerten Erntegutes wird dadurch verbessert.

Besonders bevorzugt ist das Aufsatzteil asymmetrisch zu einer Längsmittelebene des Halters an diesem befestigt. Bei einer asymmetrischen Befestigung des Aufsatzteils an dem Halter können unterschiedliche Belastungen auf das Aufsatzteil während des Zerkleinerungsprozesses, die sich aus unterschiedlichen Beabstandungen des Halters zu den benachbarten Schneidmessern ergeben, konstruktiv berücksichtigt werden. Die Lebensdauer des Erntewagens wird dadurch erhöht. Besonders vorteilhaft ist der seitliche Lageabstand der dem zugeordneten Schneidmesser zugewandten Längsaußenkante des Aufsatzteils zur Längsmittelebene des Halters geringer als der seitliche Lageabstand der dem zugeordneten Schneidmesser zugewandten Längsaußenkante des Aufsatzsteils. An der dem zugeordneten Schneidmesser zugewandten Längsaußenkante des Aufsatzteiles findet bevorzugt die Zerkleinerung des Erntegutes statt. Aus dem Zusammenwirken des Förderelementes mit dem Aufsatzteil und dem Schneidmesser ergeben sich hier erhöhte Belastungen, insbesondere Biegemomente, die durch die Wahl eines geringeren Abstandes zwischen Halter und der dem zugeordneten Schneidmesser zugewandten Längsaußenkante des Aufsatzteiles verringert werden können. Der dem zugeordneten Schneidmesser abgewandte Bereich des Aufsatzteils dient im Wesentlichen der Führung und Unterstützung des Erntegutes, so dass hier eine geringere Belastung vorliegt. Durch diese Ausgestaltung kann die Lebensdauer der Erntemaschine weiter verbessert werden.

Gemäß einer besonderen Ausführungsform ist die im Betrieb den Schneidmessern zugewandte Seite des Förderelements in Richtung der Drehachse des Förderrotors betrachtet konvex gebogen. Beim Vorbeiführen des Förderelements an den Messern ergibt sich durch die konvex gebogene Ausführung ein kleinerer Winkel zwischen einer Tangente an die Oberfläche des Förderelements und einer Tangente an die Schneide des Schneidmessers. Hierdurch kommt es zu einer verbesserten Keilwirkung auf das Fördergut, das zwischen Schneidmesser und Förderelement festgelegt und an dieser Stelle mit höherer Qualität zerteilt wird.

Es ist vorteilhaft, wenn die einzelnen Förderelemente zueinander so versetzt auf dem Förderrotor angeordnet sind, dass sie eine spiralförmige Anordnung auf dem Förderrotor ausbilden. Die einzelnen Förderelemente kommen somit gleichmäßig nacheinander in Kontakt mit den Schneidmessern. Die spiralförmige Anordnung der Förderelemente bewirkt somit eine Verringerung von Belastungsspitzen auf den Förderrotor und damit eine geringere maximale Leistungsaufnahme sowie eine erhöhte Lebensdauer der Erntemaschine.

Mit Vorteil weisen die Schneidmesser einen Wellenschnitt auf. Hierdurch wird das Zerkleinerungsergebnis weiter verbessert. Zudem ist ein Nachschärfen von Schneidmessern nur einseitig erforderlich, so dass die Schärfe der Schneidmesser einfacher wiederherzustellen ist. Da scharfe Schneidmesser für ein qualitativ hochwertiges Ergebnis der Zerkleinerung entscheidend sind, ist eine solche Vereinfachung der Wartung ausgesprochen vorteilhaft.

Gemäß einer besonderen Ausführung ist in einem Bereich in Förderrichtung vor der Aufnahmeeinheit ein Niederhalter angeordnet. Das Erntegut wird durch den Niederhalter vor der Aufnahmeeinheit vorverdichtet, so dass eine feste und kompakte Emtegutmatte aufgenommen und dem Förderrotor zugeführt wird. Hierdurch wird die Leistungsfähigkeit der Erntemaschine erhöht. Zudem ermöglicht eine festere Erntegutmatte, dass das sich Erntegut beim Vorbeiführen an den Schneidmessern selbst stützt, weniger Platz für Lageänderungen zur Verfügung hat und somit ein verbessertes Schneidergebnis erzielt werden kann.

Eine vorteilhafte Ausbildung der Erntemaschine sieht vor, dass die Schneidmesser herausnehmbar an einem Messerrahmen festgelegt sind. Hierdurch wird die Wartung der Schneidmesser sowie das Nachschärfen von verschlissenen Messern erleichtert.

Mit Vorteil sind die Schneidmesser verschwenkbar im Messerrahmen festgelegt Dadurch können z.B. Verstopfungen des Förderkanals durch eine zu hohe Erntegutaufnahme oder beispielsweise die Aufnahme von Fremdkörpern durch einfaches Herausschwenken der Schneidmesser aus dem Förderkanal behoben werden.

Besonders vorteilhaft weisen die Schneidmesser eine Überlastsicherung auf, durch die einzelne Schneidmesser bei Überlastung selbsttätig aus dem Förderkanal ausschwenken und wieder zurückschwenken können. Durch die Verwendung schwenkbarer Schneidmesser mit einer Überlastsicherung können die Schneidmesser bei einer Verstopfung selbsttätig aus dem Förderkanal ausschwenken und nach Beseitigung der Verstopfung wieder zurückschwenken. Die Betriebssicherheit der Erntemaschine wird dadurch erhöht. Zudem können einzelne Schneidmesser Fremdkörpern, die mit dem Erntegut aufgenommen wurden, ausweichen. Eine Beschädigung der Messer, insbesondere der Messerschneide, wird somit vermieden. Die Schneidmesser bleiben länger scharf und das Zerkleinerungsergebnis wird nicht durch stumpfe Messerschneiden beeinträchtigt.

In einer besonderen Ausführungsform sind im Förderkanal in Förderrichtung verlaufende Stege festgelegt und mindestens ein dem Förderelement zugeordneter Steg ist derart ausgebildet, dass er während eines Umlaufs des Förderelements zumindest teilweise in eine Ausnehmung des Förderelements im Bereich seiner Förderspitze hineinragt. Die Stege bewirken eine Verdrängung des Erntegutes, so dass in dem Bereich des Förderkanals, in dem die Stege angeordnet sind, weniger Erntegut im Förderspitzenbereich vorhanden ist. Die Zerkleinerung des Ernteguts wird damit von dem problematischen Förderspitzenbereich wegverlagert. Ferner haben die Stege ein Anheben der Erntegutmatte zur Folge. Ein Durchstechen der Erntegutmatte mit den Förderelementen des Förderrotors ist somit leichter möglich, Als zusätzlicher Effekt wird ein Verschleiß im Förderkanal von den den Förderkanal begrenzenden Blechen auf die entsprechenden Stege verschoben. Dadurch wird die Reibung verringert und die Langlebigkeit der Erntemaschine erhöht.

Mit Vorteil weisen die Stege einen rechteckigen Querschnitt auf. Rechteckige Stege sind einfach herzustellen und können einfach im Förderkanal festgelegt werden. Zudem verteilt sich bei Verwendung von rechteckigen Stegen die Belastung durch das Erntegut und somit der Verschleiß auf die dem Förderkanal zugewandte plane Oberseite des Steges. Die Lebensdauer der Stege und damit die Lebensdauer der Erntemaschine werden somit verbessert.

In einer bevorzugten Ausgestaltung sind zwischen zwei Schneidmessem auf mindestens einer Seite der Förderelemente mindestens zwei Stege unterschiedlicher Höhe angeordnet. Der Steg geringerer Höhe weist dabei einen geringeren seitlichen Lageabstand zur Förderspitze des zugeordneten Förderelements auf als der Steg größerer Höhe. Durch die Verwendung mehrerer unterschiedlich hoher Stege steht eine einfache Möglichkeit zur Verfügung, den von der Förderspitze bei einem Umlauf des Förderrotors freibleibenden Bereich möglichst vollständig mit Stegmaterial auszufüllen und somit den Abstand zwischen den Stegen und einer die Förderspitze ausbildenden Seitenkante des Förderelementes zu minimieren. Weiterhin ist bei Verwendung von mindestens zwei Stegen ein Austausch nur des höheren Steges möglich, der verstärktem Verschleiß unterliegt.

Besonders vorteilhaft ist der Steg geringerer Höhe kürzer als der Steg höherer Höhe ausgeführt. Eine solche Ausgestaltung dient einer verbesserten Führung des Ernteguts Im Bereich der Förderspitze. Diese verbesserte Führung hat ein verbessertes Schnittergebnis zur Folge, da ein Reißen oder Quetschen des Erntegutes weitgehend vermieden wird.

In einer vorteilhaften Ausbildung des Erfindungsgegenstands weist die Förderspitze des Förderelements einen geringeren seitlichen Lageabstand zu einem dem Förderelement zugeordneten Schneidmesser auf als die Längsmittelebene des Förderelements und mindestens ein Steg ist auf der dem zugeordneten Schneidmesser abgewandten Seite der Förderspitze angeordnet. Die Förderelemente des Rotors verlaufen typischerweise zwischen zwei Schneidmessern. Das Schneidergebnis kann positiv dadurch beeinflusst werden, dass ein Förderelement mit einem dieser Schneidmesser bevorzugt zusammenwirkend ausgeführt ist Dies kann z.B. dadurch erreicht werden, dass das Förderelement räumlich näher an dem zugeordneten Schneidmesser angeordnet ist. Dadurch, dass die asymmetrisch zur Längsmittelebene des Förderelements angeordnete Förderspitze dem zugeordneten Schneidmesser zugewandt ist, erfährt das Erntegut beim Zerkleinerungsvorgang im Bereich der Förderspitze eine verbesserte Führung und Unterstützung, die die Schnittqualität in diesem Bereich verbessert. Durch den auf der dem zugeordneten Schneidmesser abgewandten Seite der Förderspitze angeordneten Steg kann mit nur einem Steg ein weiter Bereich der die Förderspitze bildenden Ausnehmung am Förderelement, der beim Umlauf des Förderelements um den Förderrotor frei bleibt, ausgefüllt werden.

In einer vorteilhaften Ausgestaltung der Erfindung weisen die Stege an dem der Aufnahmeeinheit zugewandten Ende eine Schräge oder Abrundung auf. Das Fördergut kann durch die Ausgestaltung der Stege mit einer solchen Schräge oder Abrundung allmählich und kontinuierlich angehoben werden. Die Stege stellen somit kein plötzlich auftauchendes Hindernis dar. Ein Verhaken des Fördergutes an den der Aufnahmeeinheit zugewandten Kanten der Stege und somit ein Quetschen oder Reißen des Erntegutes wird weitgehend verhindert. Als weiterer Vorteil wird durch die Verringerung der Reibung die Leistungsaufnahme der Erntemaschine verringert.

In einer besonderen Ausführungsform sind die Stege durch Schweißen befestigt. Schweißen stellt eine dauerhafte und sichere Befestigungsmöglichkeit der Stege dar.

Gemäß einer besonderen Ausführungsform sind die Stege auf einem Einlegeblech befestigt, das im Förderkanal festlegbar ist. Die Stege können somit je nach Bedarf in den Förderkanal eingebracht oder aus diesem entfernt werden.

Weitere Vorteile und Einzelheiten ergeben sich aus den Ansprüchen und Unteransprüchen sowie einem Ausführungsbeispiel der Erfindung, das im Folgenden beschrieben wird; Es zeigen:
- Fig. 1: eine Erntemaschine,
- Fig. 2: ein Ausschnitt des Förderkanals mit Förderrotor,
- Fig. 3: einen Förderrotor,
- Fig. 4: einen Förderrotor und Schneidmesser im Förderkanal,
- Fig. 5: einen Förderrotor und Schneidmesser im Förderkanal mit Abdeckungen,
- Fig. 6: Messer, Förderelemente und Förderkanal gegen die Förderrichtung betrachtet.

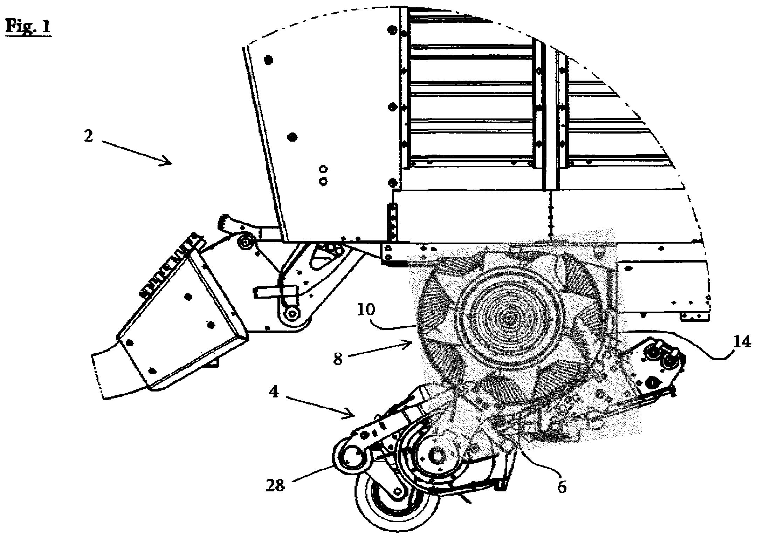

Fig. 1 zeigt eine Erntemaschine 2 mit einer Aufnahmeeinheit 4, die hier als Pickupwalze ausgestaltet ist. In Förderrichtung der Pickupwalze schießt sich der Förderkanal 6 an. Oberhalb des Förderkanals 6 ist der Förderrotor 8 mit den Förderelementen 10 angeordnet. Diese wirken mit den Schneidmessern 14 zusammen, die von der gegenüberliegenden Seite in den Förderkanal 6 hineinragen. Die Förderelemente 10 umfassen dabei einen Halter 18 und ein Aufsatzteil 20. Die Förderelemente 10 des Förderrotors 8 fördern das Erntegut an den Schneidmessern 14 vorbei in den Aufnahmebereich der Erntemaschine. Vor der Aufnahmeeinheit 4 ist ein Niederhalter 28 angeordnet.

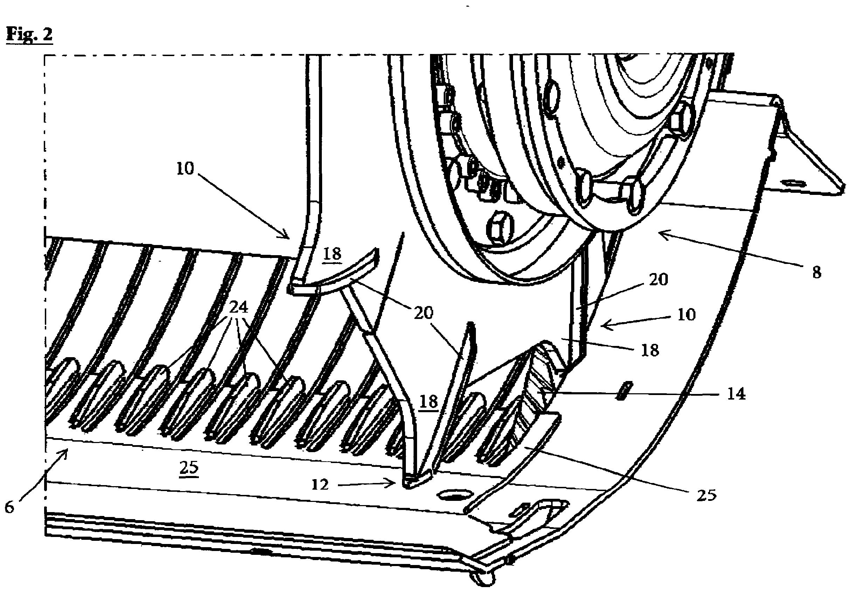

Fig. 2 zeigt einen Ausschnitt des Förderkanals 6 mit dem Förderrotor 8. Am Förderrotor 8 ist eine Reihe von in Umfangsrichtung hintereinander auf dem Förderrotor 8 festgelegter Förderelemente 10 dargestellt. Weitere Förderelemente 10 sind für eine bessere Übersichtlichkeit aus der Darstellung weggelassen worden. Die Förderelemente 10 umfassen einen Halter 18 und ein Aufsatzteil 20. Das Aufsatzteil 20 bildet dabei die Förderspitze 12 aus. Weiter ist ein Teil des Förderkanals 6 dargestellt, in den Schlitze für die Schneidmesser 14 eingebracht sind, sowie ein Schneidmesser 14, das mit den dargestellten Förderelementen 10 des Förderrotors 8 zusammenwirkt. Weiterhin sind die Stege 24 dargestellt. Die Stege 24 sind durch je zwei rechteckige Elemente unterschiedlicher Höhe ausgebildet und auf einem Leitblech 25 befestigt dargestellt. Die rechteckigen Elemente weisen an ihrem der Aufnahmeeinheit 4 zugewandten Ende eine Abschrägung auf. Die Stege 24 sind in einem Bereich in Förderrichtung des Beginns der Schlitze für die Schneidmesser 14 angeordnet.

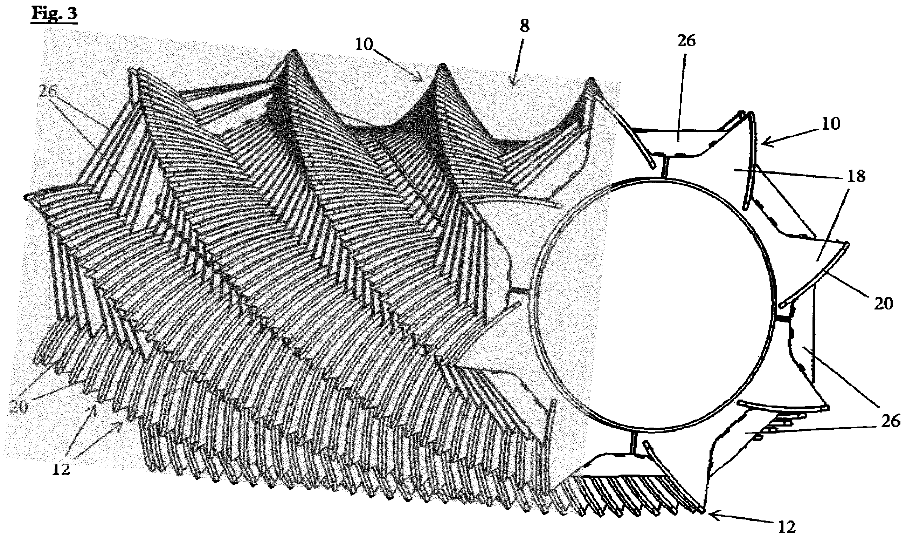

Fig. 3 zeigt den Förderrotor 8 mit Abdeckungen 26. Die Abdeckungen 26 sind hier jeweils zwischen zwei in Umfangsrichtung aufeinanderfolgenden Förderelementen 10, angeordnet, wobei jedes Förderelement 10 einen Halter 18 und ein Aufsatzteil 20 umfasst. Die Abdeckungen 26 sind als Bleche ausgestaltet, die zwischen je zwei aufeinanderfolgende Förderelemente 10 eingeschweißt sind. Am dargestellten Förderrotor 8 sind fünf Zonen erkennbar. Die jeweils vier äußeren Reihen von in Umfangsrichtung des Förderrotors 8 hintereinander angeordneten Förderelementen 10 weisen Abdeckungen 26 einer großen Höhe auf, die vier daran anschließenden Reihen von Förderelementen 10 weisen Abdeckungen 26 niedrigerer Höhe auf, während der Mittelteil des Förderrotors 8 keine Abdeckungen 26 aufweist. Der Raum zwischen zwei benachbarten Reihen an Förderelementen 10 bleibt durch die Abdeckung 26 unabgedeckt. In diesen können Schneidmesser 14 eingeführt werden. Durch die Anordnung der Abdeckungen 26 wird die Größe der Förderräume 13 zwischen zwei in Umfangsrichtung des Förderrotors 8 benachbart angeordneten Förderelementen 10 an die erwartete Stärke des Erntegutstroms angepasst. Die Größen der Förderräume 13 sind in den Randbereichen des Förderrotors 8 geringer als in einem Zentralbereich. Der Übergang erfolgt hier in zwei diskreten Stufen. Weiterhin ist die spiralförmige Anordnung der Förderelemente 10 auf dem Förderrotor 8 erkennbar.

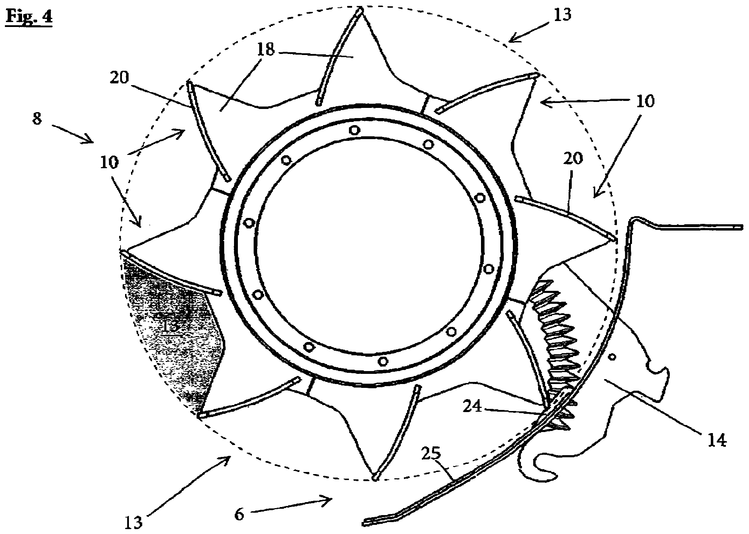

   Die Fig. 4 zeigt einen Schnitt durch den Förderrotor 8 in dem oben angesprochenen Mittelteil. Dargesteilt ist der Förderkanal 6, in den von der einen Seite die am Förderrotor 8 angeordenten Förderelemente 10, jeweils umfassend einen Halter 18 und ein Aufsatzteil 20, hineinreichen und von der anderen Seite ein Schneidmesser 14 hereinragt Weiterhin ist im Förderkanal 6 ein Steg 24 dargestellt. Es ist erkennbar, dass die dem Schneidmesser 14 zugewandte Seite des Förderelementes 10, wo das Aufsatzteil 20 angeordnet ist, konvex gebogen ist. Erntegut wird durch die Aufsatzteile 20 der Förderelemente 10 an den Schneid messern 14 gefördert. Dabei wird das Erntegut zerkleinert. In einem Bereich vor den Schneidmessern 14 wird das Erntegut durch Stege 24 angehoben.

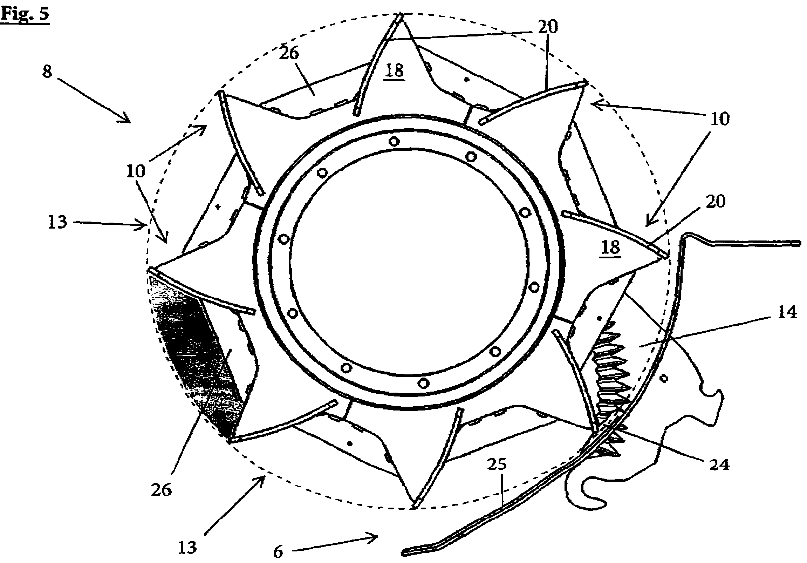

Fig. 5 zeigt einen Querschnitt durch den Förderrotor 8 und den Förderkanal 6 in einem Randbereich mit Abdeckungen 26 zwischen den einzelnen Förderelementen 10, umfassend einen Halter 18 und ein Aufsatzteil 20. Die Abdeckungen 26 verschließen dabei einen Teil des Raumes zwischen den sich in Umfangsrichtung folgenden benachbarten Förderelementen 10. Hierdurch werden die für das Erntegut zur Verfügung stehenden Förderräume 13 begrenzt. Insbesondere In Randbereichen des Förderrotors 8 Ist der Erntegutstrom schwächer ausgeprägt. Durch die Verringerung der Förderräume 13 durch die Abdeckungen 26 erfährt das Erntegut eine verbesserte Führung gegenüber den Schneidmessern 14. Dadurch wird ein verbessertes Zerkleinerungsergebnis erreicht.
Fig. 6 zeigt einen Ausschnitt des Förderkanals 6, bei dem die Schneidmesser 14 in einem Schnitt und die Förderelemente 10 gegen die Förderrichtung betrachtet werden. Es sind drei Förderelemente 10 zu erkennen, bei denen die Aufsatzteile 20 jeweils mit einer Förderspitze 12 versehen sind. Weiterhin sind im Förderkanal 6 angeordnete Stege 24 dargestellt. Jedes Förderelement 10 umfasst ein Aufsatzteil 20, das mit einem zugeordneten Schneidmesser 14 zusammenarbeitet. Der Abstand zwischen einer dem zugeordneten Schneidmesser 14 zugewandten Längsaußenkante des Aufsatzteils 20 des Förderelements 10 weist einen deutlich geringeren Abstand zum zugeordneten Schneidmesser 14 auf als die abgewandte Längsaußenkante des Aufsatzteils zum benachbarten Schneidmesser 14,

Hierdurch wird zwischen Förderelement 10 und zugeordnetem Schneidmesser 14 ein scherenartiger Schnitt des Ernteguts bewirkt.

Ferner ist zu erkennen, dass die Förderspitze 12 des Aufsatzteils 20 des Förderelements 10 asymmetrisch gegenüber einer Längsmittelebene A des Aufsatzteils 20 sowie gegenüber einer Längsmittelebene H des Halters 18 in Richtung des zugeordneten Schneidmessers 14 versetzt ist. Die im Bereich der Förderspitze 12 vom Schneidmesser 14 sich entfernende Kante des Aufsatzteils 20 entfernt sich durch diese asymmetrische Anordnung der Förderspitze 12 nur wenig vom Schneidmesser 14. Hierdurch wird auch im Bereich der Förderspitze 12 noch eine ausreichende Schneidwirkung in der Zusammenwirkung zwischen dem Förderelement 10 mit der Förderspitze 12 und dem zugeordneten Schneidmesser 14 erreicht.

Ferner Ist erkennbar, dass das Aufsatzteil 20 asymmetrisch auf dem Halter 18 befestigt ist, so dass die dem zugeordneten Schneidmesser 14 zugewandte Längsaußenkante des Aufsatzteils 20 einen geringeren Abstand zur Längsmittelebene H des Halters 18 aufweist als die dem zugeordneten. Schneidmesser 14 abgewandte Längsaußenkante des Aufsatzteils 20 des Förderelements 10. Durch den scherenartigen Schnitt zwischen Schneidmesser 14 und Förderelement 10, das hier als Förderelement 10 mit Halter 18 und Aufsatzteil 20 ausgestaltet ist, kommt es zu einer erhöhten Belastung des Aufsatzteils 20 auf der dem zugeordneten Schneidmesser 14 zugewandten Seite. Durch die asymmetrische Anordnung des Aufsatzteils 20 auf dem Halter 18 wird die auf das Aufsatzteil 20 wirkende Last verbessert aufgenommen und in den Halter18 abgeleitet. Der dem zugeordneten Schneidmesser 14 abgewandten Seite gegenüber dem Halter 18 überstehenden Teil des Aufsatzteils 20 dient in erster Linie der Führung des Ernteguts und erfährt eine weniger starke Belastung.

Ferner ist zu sehen, dass in einem Bereich, in dem durch eine schräge Ausnehmung am Aufsatzteil 20 die Förderspitze 12 ausgebildet wird, auf der dem zugeordneten Schneidmesser abgewandten Seite der Förderspitze 12 Stege 24 angeordnet sind. Hier sind zwei Stege 24 mit einem rechteckigen Querschnitt, ein Steg 24 mit einer größeren Höhe sowie ein benachbarter Steg 24 mit einer geringen Höhe, angeordnet. Durch die Verwendung von zwei rechteckigen Stegen 24 unterschiedlicher Höhe kann die Form der Ausnehmung, die die Förderspitze 12 bildet, mit rechteckigen Stegen 24 angenähert werden. Die Stege 24 dienen dazu, das Erntegut anzuheben, so dass sich nur wenig Erntegut im Bereich der Förderspitze 12 befindet. Dadurch wird das Zerkleinerungsergebnis verbessert. Der Steg 24 geringerer Höhe ist dabei näher an dem zugeordneten Schneidmesser 14 und an der Förderspitze 12 angeordnet als der Steg 24 mit der größeren Höhe.

## Patentansprüche

1. Erntemaschine (2), insbesondere Ladewagen oder Ballenpresse, mit einer Aufnahmeeinheit (4), vorzugsweise einer Pickupwalze, mit einem der Aufnahmeeinheit (4) in Förderrichtung des Erntegutes nachgeordneten Förderkanal (6) und mit einem Förderrotor (8), der eine Vielzahl von Förderelementen (10), beispielsweise Förderzinken, die in den Förderkanal (6) hineinragen und an ihrem äußeren Ende eine Förderspitze (12) aufweisen, sowie eine Vielzahl von jeweils zwischen zwei in Förderrichtung benachbarten Förderelementen (10) gelegene Förderräume (13) aufweist, sowie mit mehreren wahlweise in den Förderkanal (6) hineinragenden Schneidmessern (14), die zur Zerkleinerung des Erntegutes mit den Förderelementen (10) des Förderrotors (8) zusammenwirken, wobei der Förderrotor (8) in Längsrichtung zumindest teilweise Förderräume (13) unterschiedlicher Größe aufweist, **dadurch gekennzeichnet, dass** die Größen der Förderräume (13) in Randbereichen des Förderrotors (8) kleiner sind als in Zentralbereichen.

2. Erntemaschine (2) nach Anspruch 1, **dadurch gekennzeichnet, dass** der Förderrotor (8) in seiner Längsrichtung mehrere Zonen unterschiedlich großer Förderräume (13) aufweist.

3. Erntemaschine (2) nach einem der vorherigen Ansprüche, **dadurch gekennzeichnet, dass** der Förderrotor (2) an den je 2-6 äußeren Reihen von Förderelementen (10) je kleine Förderräume (13) aufweist, an den je 2-6 daran anschließenden Reihen von Förderelementen (10) je mittlere Förderräume (13) aufweist und an den in einem Zentralbereich des Förderrotors (8) angeordnete Reihen von Förderelementen (10) je große Förderräume (13) aufweist.

4. Erntemaschine (2) nach einem der vorherigen Ansprüche, **dadurch gekennzeichnet, dass** unterschiedliche Förderräume (13) durch Förderelemente (10) unterschiedlicher Formgebung ausgebildet werden.

5. Erntemaschine (2) nach einem der vorherigen Ansprüche, **dadurch gekennzeichnet, dass** ein Raum zwischen zwei benachbarten Förderelementen (10) des Förderrotors (8) teilweise durch eine Abdeckung (26) verschließbar ist.

6. Erntemaschine (2) nach Anspruch 5, **dadurch gekennzeichnet, dass** die Abdeckung (26) in Randbereichen des Förderrotors (8) angeordnet ist.

7. Erntemaschine (2) nach Anspruch 5 oder 6, **dadurch gekennzeichnet, dass** Abdeckungen (26) unterschiedlicher Ausmaße am Förderrotor (8) mehrere Zonen unterschiedlich große verschlossenen Räumen ausbilden.

8. Erntemaschine (2) nach einem der Ansprüche 5 bis 7, **dadurch gekennzeichnet, dass** an den je 2-6 äußeren Reihen von in Umfangsrichtung des Förderrotors (8) hintereinander angeordneten Förderelementen (10) erste Abdeckungen (26) angeordnet sind und an den je 2-6 daran anschließenden Reihen von in Umfangsrichtung des Förderrotors (8) hintereinander angeordneten Förderelementen (10) zweite Abdeckungen (26) angeordnet sind, durch die jeweils ein kleinerer Raum verschließbar ist als durch die ersten Abdeckungen (26).

9. Erntemaschine (2) nach einem der Ansprüche 5 bis 8, **dadurch gekennzeichnet, dass** die Abdeckung (26) zwischen in Umfangsrichtung der Förderwalze (8) hintereinander auf der Förderwalze (8) angeordneten Förderelementen (10) festgelegt ist.

10. Erntemaschine (2) nach einem der Ansprüche 5 bis 9, **dadurch gekennzeichnet, dass** die Abdeckung (26) durch ein zwischen benachbarten Förderelementen (10) festgelegtes Blech gebildet ist.

11. Erntemaschine (2) nach einem der Ansprüche 5 bis 10, **dadurch gekennzeichnet, dass** die Abdeckung (26) durch Schweißen festgelegt ist.

12. Erntemaschine (2) nach einem der vorherigen Ansprüche, **dadurch gekennzeichnet, dass** im Förderkanal (6) in Förderrichtung verlaufende Stege (24) festgelegt sind und mindestens ein dem Förderelement (10) zugeordneter Steg (24) derart ausgebildet ist, dass er während eines Umlaufs des Förderelementes (10) zumindest teilweise in eine Ausnehmung des Förderelementes (10) im Bereich seiner Förderspitze (12) hineinragt.

13. Erntemaschine (2) nach Anspruch 12, **dadurch gekennzeichnet, dass** die Stege (24) einen rechteckigen Querschnitt aufweisen.

14. Erntemaschine (2) nach einem der Ansprüche 12 oder 13, **dadurch gekennzeichnet, dass** zwischen zwei Schneidmessern (14) auf mindestens einer Seite der Förderelemente (10) mindestens zwei Stege (24) unterschiedlicher Höhe angeordnet sind, wobei der Steg (24) geringerer Höhe einen geringeren seitlichen Lageabstand zur Förderspitze (12) des zugeordneten Förderelementes (10) aufweist als der Steg (24) größerer Höhe.

15. Erntemaschine (2) nach einem der Ansprüche 12 bis 14, **dadurch gekennzeichnet, dass** die Förderspitze (12) einen geringeren seitlichen Lageabstand zu dem zugeordneten Schneidmesser (14) aufweist als die Längsmittelebene des Förderelementes (10) und mindestens ein Steg (24) auf der dem zugeordneten Schneidmesser (14) abgewandten Seite der Förderspitze (12) angeordnet ist.

16. Erntemaschine (2) nach einem der Ansprüche 12 bis 15, **dadurch gekennzeichnet, dass** die Stege (24) an dem der Aufnahmeeinheit (4) zugewandten Ende eine Schräge oder Abrundung aufweisen.

17. Erntemaschine (2) nach einem der Ansprüche 12 bis 16, **dadurch gekennzeichnet, dass** die Stege (24) durch Schweißen befestigt sind.

18. Erntemaschine (2) nach einem der Ansprüche 12 bis 17, **dadurch gekennzeichnet, dass** die Stege (24) auf einem Einlegeblech (25) befestigt sind, das im Förderkanal (6) festlegbar ist.

## Claims

1. Harvesting machine (2), in particular a forage wagon or baling press, comprising a pick-up unit (4), preferably a pick-up roller, comprising a conveying channel (6) downstream of the pick-up unit (4) in the conveying direction of the harvested crop and comprising a conveying rotor (8) which has a large number of conveying elements (10), for example conveying tines, which project into the conveying channel (6) and have a conveying tip (12) at their outer end, and a large number of conveying spaces (13) located, in each case, between two conveying elements (10) which are adjacent in the conveying direction, and comprising a plurality of cutting blades (14) which optionally project into the conveying channel (6) and interact with the conveying elements (10) of the conveying rotor (8) in order to comminute the harvested crop, the conveying rotor (8) having conveying spaces (13) of different sizes in the longitudinal direction at least in part, **characterised in that** the sizes of the conveying spaces (13) are smaller in edge regions of the conveying rotor (8) than in central regions.

2. Harvesting machine (2) according to claim 1, **characterised in that** the conveying rotor (8) has a plurality of zones of differently sized conveying spaces (13) in its longitudinal direction.

3. Harvesting machine (2) according to either of the preceding claims, **characterised in that** the conveying rotor (2) has small conveying spaces (13) on each of the 2-6 outer rows of conveying elements (10), has medium conveying spaces (13) on each of the 2-6 adjoining rows of conveying elements (10) and has large conveying spaces (13) on the rows of conveying elements (10) that are arranged in a central region of the conveying rotor (8).

4. Harvesting machine (2) according to any of the preceding claims, **characterised in that** different conveying spaces (13) are formed by conveying elements (10) of different shapes.

5. Harvesting machine (2) according to any of the preceding claims, **characterised in that** a space between two adjacent conveying elements (10) of the conveying rotor (8) can be partly closed off by a cover (26).

6. Harvesting machine (2) according to claim 5, **characterised in that** the cover (26) is arranged in edge regions of the conveying rotor (8).

7. Harvesting machine (2) according to either claim 5 or claim 6, **characterised in that** covers (26) of different dimensions on the conveying rotor (8) form a plurality of zones of differently sized closed-off spaces.

8. Harvesting machine (2) according to any of claims 5 to 7, **characterised in that** first covers (26) are arranged on each of the 2-6 outer rows of conveying elements (10) which are arranged one behind the other in the circumferential direction of the conveying rotor (8) and second covers (26) are arranged on each of the 2-6 adjoining rows of conveying elements (10) which are arranged one behind the other in the circumferential direction of the conveying rotor (8), by means of which second covers a smaller space can be closed off than by means of the first covers (26).

9. Harvesting machine (2) according to any of claims 5 to 8, **characterised in that** the cover (26) is secured between conveying elements (10) which are arranged on the conveying roller (8) one behind the other in the circumferential direction of the conveying roller (8).

10. Harvesting machine (2) according to any of claims 5 to 9, **characterised in that** the cover (26) is formed by a plate secured between adjacent conveying elements (10).

11. Harvesting machine (2) according to any of claims 5 to 10, **characterised in that** the cover (26) is secured by welding.

12. Harvesting machine (2) according to any of the preceding claims, **characterised in that** projections (24) which extend in the conveying direction are secured in the conveying channel (6) and at least one projection (24) which is associated with the conveying element (10) is formed such that it projects at least partly into a recess in the conveying element (10) in the region of its conveying tip (12) during a revolution of the conveying element (10).

13. Harvesting machine (2) according to claim 12, **characterised in that** the projections (24) have a rectangular cross section.

14. Harvesting machine (2) according to either claim 12 or claim 13, **characterised in that** at least two projections (24) of different heights are arranged between two cutting blades (14) on at least one side of the conveying elements (10), the projection (24) of smaller height having a smaller lateral positional distance from the conveying tip (12) of the associated conveying element (10) than the projection (24) of greater height.

15. Harvesting machine (2) according to any of claims 12 to 14, **characterised in that** the conveying tip (12) has a smaller lateral positional distance from the associated cutting blade (14) than the longitudinal centre plane of the conveying element (10) and at least one projection (24) is arranged on the side of the conveying tip (12) that faces away from the associated cutting blade (14).

16. Harvesting machine (2) according to any of claims 12 to 15, **characterised in that** the projections (24) have a bevel or rounding at the end which faces the pick-up unit (4).

17. Harvesting machine (2) according to any of claims 12 to 16, **characterised in that** the projections (24) are attached by welding.

18. Harvesting machine (2) according to any of claims 12 to 17, **characterised in that** the projections (24) are attached to an insert plate (25) which can be secured in the conveying channel (6).

## Revendications

1. Moissonneuse (2) en particulier chargeur mobile ou presse à balles comportant une unité de réception (4) de préférence un rouleau d'entraînement,
un canal de transfert (6) situé en aval de l'unité de réception (4) dans la direction d'acheminement des produits de récolte et un rotor de transfert (8) qui comporte une série d'éléments de transfert (10) à titre d'exemple ou de dents de transfert qui pénètrent dans le canal de transfert (6) et comportent à leur extrémité externe une pointe de transfert (12) ainsi qu'une série de chambres de transfert (13) respectivement situées entre deux éléments de transfert (10) voisins dans la direction d'acheminement, et plusieurs lames de coupe (14) faisant sélectivement saillie dans la canal de transfert (6) qui coopèrent avec les éléments de transfert (10) du rotor de transfert (8) pour fragmenter les produits de récolte, le rotor de transfert (8) comprenant, dans la direction longitudinale au moins partiellement des chambres de transfert (13) de différentes dimensions,
**caractérisée en ce que**
les dimensions des chambres de transfert (13) sont plus petites au niveau des zones de bord du rotor de transfert (8) qu'au niveau des zones centrales de celui-ci.

2. Moissonneuse (2) conforme à la revendication 1,
**caractérisée en ce que**
le rotor de transfert (8) comporte dans sa direction longitudinale plusieurs zones ayant des chambres de transfert (13) de différentes dimensions.

3. Moissonneuse (2) conforme à l'une des revendications précédentes,
**caractérisée en ce que**
le rotor de transfert (2) comporte respectivement, pour chaque rangée externes 2-6 d'éléments de transfert (10) des petites chambres de transfert (13) pour chaque rangée 2-6 s'y connectant, des éléments de transfert (10) des chambres de transfert moyennes (13), et pour les rangées d'éléments de transfert (10) situées dans la zone centrale du rotor de transfert (8) des grandes chambres de transfert (13).

4. Moissonneuse (2) conforme à l'une des revendications précédentes,
**caractérisée en ce que**
chambres de transfert (13) différentes sont formées par des éléments de transfert (10) différemment mis en forme.

5. Moissonneuse (2) conforme à l'une des revendications précédentes,
**caractérisée en ce que**
une chambre située entre deux éléments de transfert (10) voisins du rotor de transfert (8) peut être partiellement fermée par un capot (26).

6. Moissonneuse (2) conforme à la revendication 5,
**caractérisée en ce que**
le capot (26) est situé dans des zones de bord du rotor de transfert (8).

7. Moissonneuse (2) conforme à la revendication 5 ou 6,
**caractérisée en ce que**
des capots (26) de différentes étendues forment sur le rotor de transfert (8) plusieurs zones de chambres fermées de différentes dimensions.

8. Moissonneuse (2) conforme à l'une des revendications 5 à 7,
**caractérisée en ce que**
sur chaque rangée externe 2-6 d'éléments de transfert (10) situés les uns derrières les autres dans la direction périphérique du rotor de transfert (8) sont installés des premiers capots (26) et sur chaque rangée 2-6 qui y est connectée d'éléments de transfert (10) situés les uns derrières les autres dans la direction périphérique du rotor de transfert (8) sont installés des seconds capots (26) par lesquels peut être fermée une chambre plus petite que par les premiers capots (26).

9. Moissonneuse (2) conforme à l'une des revendications 5 à 8,
**caractérisée en ce que**
le capot (26) est fixé entre des éléments de transfert (10) situés les uns derrières les autres sur le rouleau de transfert (8) dans la direction périphérique de ce rouleau de transfert (8).

10. Moissonneuse (2) conforme à l'une des revendications 5 à 9,
**caractérisée en ce que**
le capot (26) est formé par une tôle fixée entre des éléments de transfert (10) voisins.

11. Moissonneuse (2) conforme à l'une des revendications 5 à 10,
**caractérisée en ce que**
le capot (26) est fixé par soudage.

12. Moissonneuse (2) conforme à l'une des revendications précédentes,
**caractérisé en ce que**
dans le canal de transfert (6) sont fixées des barrettes (24) s'étendant dans la direction de transfert, et au moins une barrette (24) associée à l'élément de transfert (10) est réalisée de sorte qu'elle pénètre pendant une rotation de l'élément de transfert (10) au moins partiellement dans un évidement de cet élément de transfert (10) dans la zone de sa pointe de transfert (12).

13. Moissonneuse (2) conforme à la revendication 12,
**caractérisée en ce que**
les barrettes (24) ont une section rectangulaire.

14. Moissonneuse (2) conforme à l'une des revendications 12 et 13,
**caractérisé en ce que**
entre deux lames de coupe (14) sur au moins un côté des éléments de transfert (10) sont installées au moins deux barrettes (24) de différentes hauteurs, la barrette (24) ayant la plus faible hauteur étant située à une distance latérale plus faible de la pointe de transfert (12) de l'élément de transfert (10) associé que la barrette (24) ayant la plus grande hauteur.

15. Moissonneuse (2) conforme à l'une des revendications 12 et 14,
**caractérisée en ce que**
la pointe de transfert (12) est située à une distance latérale plus faible de la lame de coupe (14) associée que le plan longitudinal médian de l'élément de transfert (10) et au moins une barrette (24) et installée sur le côté de la pointe de transfert (12) situé à l'opposée de la lame de coupe (14) associée.

16. Moissonneuse (2) conforme à l'une des revendications 12 à 15,
**caractérisée en ce que**
les barrettes (24) comportent à leur extrémité tournée vers l'unité de réception (4) un biseau ou un arrondi.

17. Moissonneuse (2) conforme à l'une des revendications 12 à 16,
**caractérisée en ce que**
les barrettes (24) sont fixées par soudage.

18. Moissonneuse (2) conforme à l'une des revendications 12 à 17,
**caractérisée en ce que**
les barrettes (24) sont fixées sur une tôle d'insertion (25) qui peut être fixée dans le canal de transfert (6).
